# EUROPEAN PATENT SPECIFICATION

(11) **EP 3 817 548 B1**
(45) Date of publication and mention of the grant of the patent: **31.12.2025**
(21) Application number: 19759048.2
(22) Date of filing: 04.07.2019
(51) Int. Cl.: A01K 79/02, A01M 29/16

(54) **PINGER FOR DETERRING TOOTHED WHALES**
PINGER ZUR ABSCHRECKUNG VON ZAHNWAHLEN
ÉCHO-SONDEUR POUR ÉLOIGNER DES CÉTACÉS À DENTS

(30) Priority: 04.07.2018 GB 201810957
(43) Date of publication of application: 12.05.2021
(73) Proprietor: Fishtek Marine Ltd, Totnes, Devon TQ9 6JY (GB)
(72) Inventor: KIBEL, Ben, Devon TQ13 8NA (GB)
(74) Representative: Handsome I.P. Ltd
(86) International application number: PCT/IB2019/055717
(87) International publication number: WO 2020/008407

(56) References cited:
- WO-A1-98/03062
- WO-A1-98/03062
- AU-A- 1 176 670
- AU-A1- 2013 204 487
- GB-A- 2 505 992
- US-A- 5 610 876
- KASTELEIN ET AL: "Differences in the response of a striped dolphin (Stenella coeruleoalba) and a harbour porpoise (Phocoena phocoena) to an acoustic alarm", MARINE ENVIRONMENTAL RESEARCH, APPLIED SCIENCE PUBLISHERS, BARKING, GB, vol. 61, no. 3, 1 April 2006 (2006-04-01), pages 363 - 378, XP005294418, ISSN: 0141-1136, DOI: 10.1016/J.MARENVRES.2005.11.005
- ABBY CROSBY ET AL: "The Banana Pinger Trial: Investigation into the Fishtek Banana Pinger to reduce cetacean bycatch in an inshore set net fishery", THE WILDLIFE TRUSTS CORNWALL REPORT, 1 October 2013 (2013-10-01), pages 1 - 27, XP055626447, Retrieved from the Internet <URL:https://www.ascobans.org/sites/default/files/document/NSG4_Inf_4.3_BananaPinger.pdf> [retrieved on 20190926]

## Description

The present invention relates generally to a pinger for deterring toothed whales and a method of method of deterring toothed whales and finds particular, although not exclusive, utility in long line fishing.

Toothed whales are known to depredate (i.e. steal) fish from nets and longlines during the human act of fishing (e.g. for tuna or swordfish).

It is well established that toothed whales have acute hearing sensitivity, especially in the frequency range 5 to 50 kHz. It is also known to use acoustic pingers, which emit a series of acoustic pings within that frequency range, to deter smaller toothed whales (such as porpoises) from depredating fish. Such pingers may be attached to the nets or longlines at strategic points. In contrast, fish are not as sensitive to this acoustic range and are relatively unaffected by the pings from the pingers.

However, acoustic pingers that are effective against porpoises are not effective against larger toothed whales such as dolphins, false killer whales and killer whales. In order to deter such larger toothed whales, louder pings must be employed (for instance in the region of between 140dB and 300dB, in particular between 160dB and 240dB, for example around 170dB). In order to provide the power for producing the necessary higher volume pings and to maintain operational lifetime, two approaches have been considered.

The first is to provide a larger battery in the pinger; however, this results in a much larger and heavier pinger that would hinder the fishing activity itself if attached to a net or longline.

The second approach is to provide a boat-mounted acoustic pinger, for which there is no limitation on the size or weight of the pinger, and which requires the use of an even higher volume of ping to overcome relatively high sound attenuation in water. However, high levels of underwater sound create a potential hazard to marine and amphibious animals, particularly those that use sonar for navigation.

WO9803062A1 describes arranging an array of acoustic devices on a net to deter marine animals from approaching the net and becoming entangled therein.

GB2505992A describes a system for deterring predators from a fish enclosure, the system comprising electrified enclosure sections and optionally including one or more acoustic alarm devices for startling or scaring the predators.

US5610876A describes an acoustic deterrent device for deterring predators from a fish enclosure by emitting an acoustic signal at a volume high enough to cause pain. The volume is gradually ramped up to give the predators time to swim away without suffering pain.

AU1176670A describes a pulse generator for generating a pulsed electric field between two electrodes in seawater, primarily for use in deterring sharks and other animals that are sensitive to pulsed electrical fields.

Thus it is desirable to develop an acoustic pinger for deterring toothed whales of a kind much larger than porpoises, without substantially increasing the pinger's size and weight beyond what is already effective against porpoises.

The present invention is defined in the attached independent claims 1 and 2.

Each ping in the series of pings may comprise a pseudorandomly selected sequence of syllables from a plurality of pre-determined syllables, each of the plurality of predetermined syllables comprising sound emitted over a predetermined frequency range different from a predetermined frequency range of each other one of the plurality of predetermined syllables.

**In** this way, the pseudo-randomised ping nature may reduce habituation to the pings by toothed whales.

Each sequence of syllables may comprise only two or more predetermined syllables, only three or more predetermined syllables, only four or more predetermined syllables, only five or more predetermined syllables, only six or more predetermined syllables, only seven or more predetermined syllables and/or only eight or more predetermined syllables.

The plurality of pre-determined syllables may comprise only two or more predetermined syllables, only three or more predetermined syllables, only four or more predetermined syllables, only five or more predetermined syllables, only six or more predetermined syllables, only seven or more predetermined syllables and/or only eight or more predetermined syllables.

Each sequence of syllables may comprise up to one, only one, and/or more than one of each of the plurality of predetermined syllables. Each sequence of syllables may comprise fewer, the same number of, and/or more syllables as the total number of the plurality of pre-determined syllables. Each sequence of syllables may one of a set of unique permutations of the plurality of predetermined syllables. For example, each sequence of syllables may comprise all of the plurality of predetermined syllables, each of the plurality of predetermined syllables only once.

Pseudorandom selection may comprise selection via a computer processor implemented random number generator, and/or selection by monitoring one or more naturally varying phenomena. For example, if the plurality of pre-determined syllables comprises only two predetermined syllables, the pseudorandom selection may comprise selecting either a first followed by a second predetermined syllable, or selecting the second followed by the first predetermined syllable. As a further example, if the plurality of pre-determined syllables comprises only three predetermined syllables, the pseudorandom selection may comprise selecting a first, followed by a second, followed by a third predetermined syllable, a second, followed by a third, followed by a first predetermined syllable, a third, followed by a first, followed by a second predetermined syllable, a first, followed by a third, followed by a second predetermined syllable, a third, followed by a second, followed by a first predetermined syllable, or a second, followed by a third, followed by a first predetermined syllable.

Pseudorandom selection may comprise selection by reference to a predetermined pseudorandom sequence. **In** this way, the pinger may merely refer to a pseudorandom sequence stored in memory, rather than having to determine the pseudorandom sequence itself, thus saving processor power. When an end of the predetermined pseudorandom sequence is reached, the pinger may restart at a beginning of the predetermined pseudorandom sequence.

The predetermined frequency range of each syllable may be between 30kHz and 50kHz, in particular between 35kHz and 45kHz, more particularly between 37kHz and 41kHz, for example between 37kHz and 38kHz, between 38kHz and 39kHz, between 38kHz and 40kHz, between 38kHz and 41kHz, between 39kHz and 41kHz and/or between 40kHz and 41kHz.

Each of the plurality of predetermined syllables may have a frequency range that may overlap or not overlap with a predetermined frequency range of at least one other one of the plurality of predetermined syllables.

Each ping in the series of pings may be separated from each adjacent ping by between 1s and 30s, in particular between 2s and 25s, more particularly between 3s and 20s, for example between 4s and 14s.

Each ping in the series of pings may be separated from each adjacent ping by a pseudorandomly selected time period.

Each ping may have a duration of between 10ms and 60ms, in particular between 20s and 45s, more particularly between 25s and 35s, for example approximately 30ms.

**In** this way, the ping duration is optimised to toothed whales hearing time constant at frequencies of around 40kHz. A shorter ping would just sound quieter to the animal and a longer ping would just sound longer, so 30ms gives the best response for the minimum energy. This is beneficial as it maximises battery life. The ping duration may be pseudorandomly selected.

Each syllable may have a duration of between 1ms and 20ms, in particular between 2ms and 10ms, more particularly between 4ms and 8ms, for example approximately 5ms. the syllable duration may be pseudorandomly selected.

Each syllables may comprise a constant emission across its frequency range. However, preferably each syllable comprises a sweep across its frequency range. For example, the sweep may comprise an up-sweep from a lower extent of the frequency range to an upper extent of the frequency range, and/or the sweep may comprise a down-sweep from an upper extent of the frequency range to a lower extent of the frequency range.

The pinger may comprise a loudspeaker configured to produce a series of pings.

The pinger may comprise a microphone for determining a background noise level, and the pinger may be configured to vary a volume of each ping in the series of pings in response in response to a background noise level determined by the microphone.

The pinger may comprise: a loudspeaker configured to produce a series of pings; and a microphone for determining a background noise level; wherein the pinger is configured to vary a volume of each ping in the series of pings in response in response to a background noise level determined by the microphone.

The benefit of reducing sound output when there are lower background noise levels is to greatly improve battery life. It would also minimise the amount that pingers add to general man made marine noise, this is a known problem for marine life.

The pinger may be implemented using a power source comprising a standard C cell alkaline battery, but in alternative arrangements could be implemented using a standard D cell alkaline battery, or one, two, three or four standard AA cell alkaline batteries.

The pinger may have a working battery life of up to 170 hours; equivalent to up to 2 weeks of typical fishing activity.

The loudspeaker may comprise a transducer. The loudspeaker may comprise a piezoelectric transducer.

The microphone may comprise the loudspeaker. For instance, the microphone may be a loudspeaker transducer operated in reverse. Circuitry may be provided to allow the microphone to be driven to produce sound.

The circuitry may be controlled by a microcontroller and/or other form of processor. In particular, the microcontroller may be configured to process sounds detected by the microphone and to alter the volume of the loudspeaker in response thereto.

The pinger may comprise a sensor configured to determine when a fish has been caught by a hook adjacent to the pinger, and the pinger may be configured to generate the series of pings in response to a determination by the sensor that a fish has been caught by a hook adjacent to the pinger.

Usually only a small proportion (typically 1-2%) of branch lines catch a fish on a typical long line set. The average battery life of the pinger is greatly improved by only operating when there is a fish to protect against depredation. For example, this allows the pinger to be loud enough to be effective but still have a very long and practical battery life. This is especially important in the long-line fishing application where typically 2000 devices would be needed for a single vessel. For example, by using a catch detection device, only 40 batteries would need to be changed every set (40 fish caught) rather than all 2000. This has the effect of increasing the battery life by 50 times.

When a target fish (e.g. tuna or swordfish) is hooked, the fish swims rapidly in many directions to try and escape the hook. This action by the fish may be detected in a variety of different ways.

An output from the sensor may be connected to a microcontroller, which may use an algorithm to interpret the output in order to determine when a fish was on the line.

The pinger may be configured to have a ping mode, a sleep mode and/or an off mode. The microcontroller may be configured to transition the pinger from the sleep mode (in which no pings are produced) to the ping mode (in which a series of pings are generated) when an output from the sensor indicative of a fish on the line is received. Similarly, the microcontroller may be configured to transition the pinger from the ping mode to the sleep mode when an output from the sensor (and/or an absence of an output from the sensor) indicative of no fish on the line is received.

The pinger may be connectable to a fishing line substantially above a baited hook. For instance, the pinger may be connected to a line immediately above (i.e. adjacent to a baited hook).

The sensor may comprise an accelerometer.

The sensor may comprise a mechanism for determining a tension in a fishing line.

In addition, the pinger may be configured to switch to sleep mode when removed from water (e.g. in the absence of water). Alternatively, the pinger may be configured to switch to off mode when removed from the water and/or in the absence of water. In this way, the sensor need not provide any output to the microcontroller when not in the water. The pinger may be water-activated.

The pinger may comprise a DC power source with a first voltage. The pinger may comprise a DC-DC converter that may be configured to step-up the first voltage to a second voltage. The pinger may comprise a capacitor configured to store charge at the second voltage. The pinger may comprise a controller configured to use charge stored by the capacitor at the second voltage to activate the loudspeaker to produce a ping.

According to the invention defined in claim 1, the pinger comprises: a loudspeaker configured to produce a series of pings; a DC power source with a first voltage; a DC-DC converter configured to step-up the first voltage to a second voltage; a capacitor configured to store charge at the second voltage; a controller configured to use charge stored by the capacitor at the second voltage to activate the loudspeaker to produce a ping, pings of up to 240dB may be created, using power of about 13W. Typically standard alkaline cells (such as C cells) are not able to achieve outputs of 13W, but rather can only manage in the region of about 2W. By stepping up the voltage and storing the power in a capacitor over an extended period, a higher power output may be achieved over a very short time period.

The DC power source may have a voltage of between 1V and 3V, for example 1.5V.

The DC-DC converter may comprise a single sub-converter, or may comprise a plurality of (e.g. two) sub-converters, a first sub-converter stepping up the DC voltage a first amount, and a second sub-converter stepping up the DC voltage a second amount.

The DC-DC converter may be configured to step up the voltage to at least 40V, in particular at least 45V, more particularly at least 50V, for example approximately 50V.

The controller may comprise a microcontroller and/or other form of processor.

The pinger may further comprise a DC-AC converter arranged to convert DC current from the capacitor to an AC signal for driving the loudspeaker.

The controller may be configured to control the DC-AC converter to modulate the AC signal to generate distinct syllables at the loudspeaker.

Each ping in the series of pings may comprising a pseudorandomly selected sequence of syllables from a plurality of pre-determined syllables, and each of the plurality of predetermined syllables may comprise sound emitted over a predetermined frequency range different from a predetermined frequency range of each other one of the plurality of predetermined syllables, as described above.

According to the invention defined in claim 2, there is provided a method for deterring toothed whales, the method comprising the steps of: providing a pinger as described above; and activating the pinger to produce a ping.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.
Figure 1 is an exploded view of a pinger.
Figure 2 is a circuit diagram of a pinger.

The present invention will be described with respect to certain drawings but the invention is not limited thereto but only by the claims. The drawings described are only schematic and are non-limiting. Each drawing may not include all of the features of the invention and therefore should not necessarily be considered to be an embodiment of the invention. In the drawings, the size of some of the elements may be exaggerated and not drawn to scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that operation is capable in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that operation is capable in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and **B.** It means that with respect to the present invention, the only relevant components of the device are A and **B.**

Similarly, it is to be noticed that the term "connected", used in the description, should not be interpreted as being restricted to direct connections only. Thus, the scope of the expression "a device A connected to a device B" should not be limited to devices or systems wherein an output of device A is directly connected to an input of device **B.** It means that there exists a path between an output of A and an input of B which may be a path including other devices or means. "Connected" may mean that two or more elements are either in direct physical or electrical contact, or that two or more elements are not in direct contact with each other but yet still co-operate or interact with each other. For instance, wireless connectivity is contemplated.

Reference throughout this specification to "an embodiment" or "an aspect" means that a particular feature, structure or characteristic described in connection with the embodiment or aspect is included in at least one embodiment or aspect of the present invention. Thus, appearances of the phrases "in one embodiment", "in an embodiment", or "in an aspect" in various places throughout this specification are not necessarily all referring to the same embodiment or aspect, but may refer to different embodiments or aspects. Furthermore, the particular features, structures or characteristics of any one embodiment or aspect of the invention may be combined in any suitable manner with any other particular feature, structure or characteristic of another embodiment or aspect of the invention, as would be apparent to one of ordinary skill in the art from this disclosure, in one or more embodiments or aspects.

Similarly, it should be appreciated that in the description various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Moreover, the description of any individual drawing or aspect should not necessarily be considered to be an embodiment of the invention. Rather, as the following claims reflect, inventive aspects lie in fewer than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some features included in other embodiments, combinations of features of different embodiments are meant to be within the scope of the invention defined by the appended claims, and form yet further embodiments, as will be understood by those skilled in the art. For example, in the following claims, any of the claimed embodiments can be used in any combination.

In the description provided herein, numerous specific details are set forth. However, it is understood that embodiments of the invention may be practised without these specific details. In other instances, well-known methods, structures and techniques have not been shown in detail in order not to obscure an understanding of this description.

In the discussion of the invention, unless stated to the contrary, the disclosure of alternative values for the upper or lower limit of the permitted range of a parameter, coupled with an indication that one of said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

The use of the term "at least one" may mean only one in certain circumstances. The use of the term "any" may mean "all" and/or "each" in certain circumstances.

The principles of the invention will now be described by a detailed description of at least one drawing relating to exemplary features. It is clear that other arrangements can be configured according to the knowledge of persons skilled in the art without departing from the underlying concept or technical teaching, the invention being limited only by the terms of the appended claims.

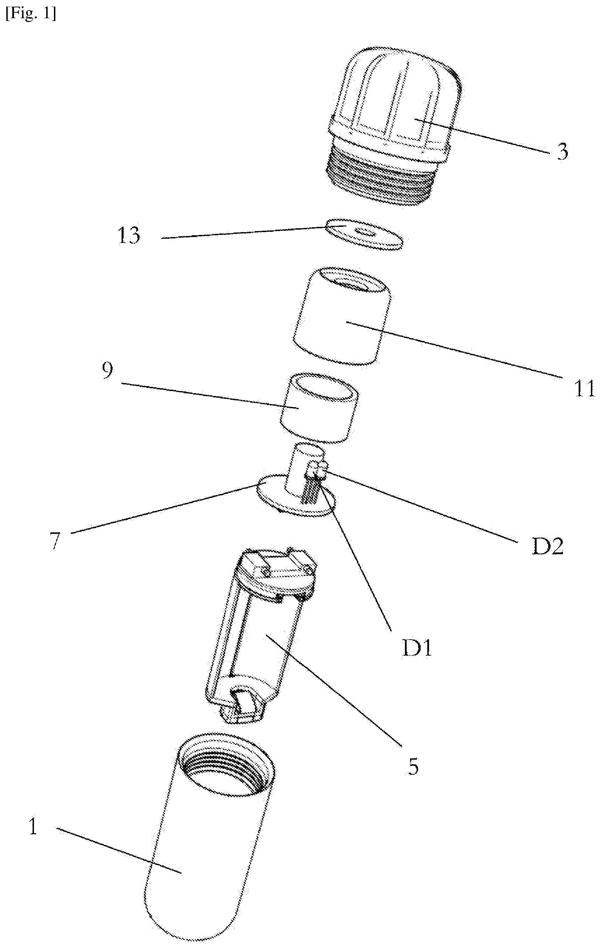

Figure 1 is an exploded view of a pinger having an external water-tight housing formed of a body 1 and a cap 3. The cap 3 is a screw fit on the body 1, and is sealed by means of an O-ring (not shown) between. The body 1 and cap 3 may each be made of a rigid plastics material, and may preferably be transparent (e.g. clear polycarbonate).

A battery case 5 is insertable within the body 1; however, it can be appreciated that this could alternatively be integrally formed therewith. The battery case 5 is sized to accept a standard C battery, and is provided with electrical contacts at each end.

The contact on the battery case 5 allow connection of the battery to a circuit board element 7, which includes two LEDs: a green LED D1 and a red LED D2. A microcontroller on the circuit board element 7 controls the green LED D1 and the red LED D2 to indicate remaining battery life (e.g. good: green D1 and bad: red D2, for example flashing).

A hollow cylindrical ceramic transducer element 9 is receive on the circuit board element. The transducer element 9 is configured to be driven by the circuit board element 7 to produce a ping.

Two short 30mm wires come from the circuit board and connect to the transducer, one to the inner surface of the tube and the other to the outer surface, the ceramic tube has a silver-plated coating on the inner and outer surface. The ceramic is a piezoelectric material.

The ceramic transducer element 9 is mounted inside a transducer mounting 11, which may be rubber, silicone, synthetic rubber, or a similar material (e.g. thermoplastic elastomer Shore 10).

Placed atop the transducer mounting 11 is a capacitive switch disc 13, which may be conductive (for example brass) and may be approximately 0.25mm thick. Mounted on the capacitive switch disc 13 is a conductive rubber pad (not shown) formed of a thermoplastic elastomer Shore 60 with carbon added to make it electrically conductive.

The microprocessor is arranged to determine a capacitance between the conductive rubber pad (not shown) and the water on the outside of the cap 3. The capacitance is very low typically 2 picofarads. The measured capacitance in fact results from three capacitors in series. One is formed between the capacitance disc 13 and the rubber pad (not shown) as they are in contact the gap is small so the capacitance is high about 50 picofarads, the other is between the conductive rubber pad and the water on the outside of the housing - the gap is caused by the thickness of the plastic cap (for example about 1.6mm); this gap results in a low capacitance of about 3 picofarads, the third capacitor is between the battery and the water. This gap is large (about 5mm) but the surface area is also large so the capacitance is about 8 picofarads. When all three capacitors are added in series the result is about 2 picofarads in water and about 0.5 picofarads when out of water. This is enough difference for the microcontroller to detect when the device is in water. When the microcontroller detects submersion in water, the pinger enters ping mode.

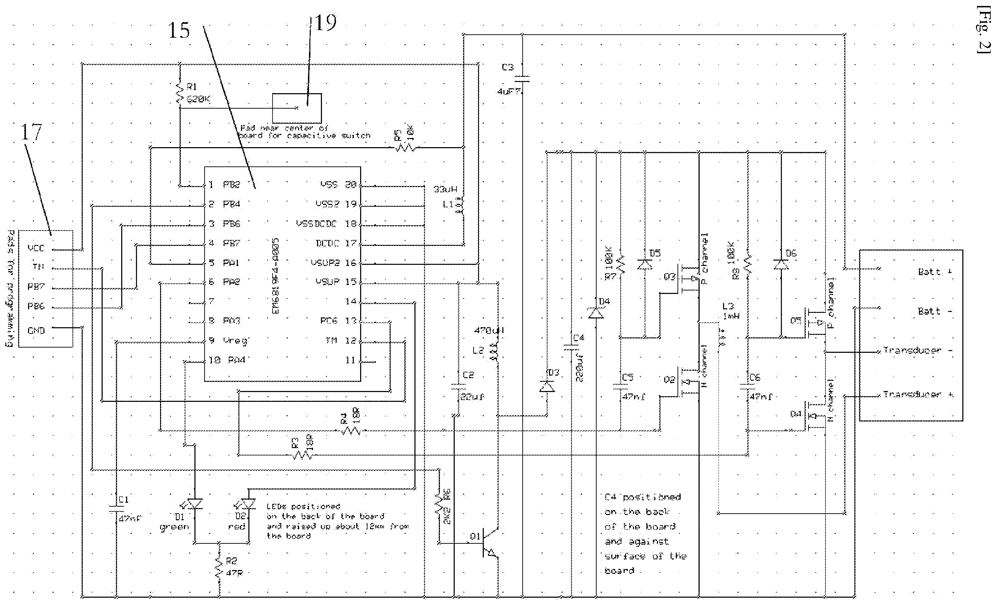

Figure 2 is a circuit diagram of a pinger circuit board element 7 including a microprocessor 15 including a twenty pins.

Power is supplied to the microprocessor via a sub-circuit from the battery positive and negative contacts (Batt+, Batt-) from the battery case 5 to pins 5 PA1, DCDC 17, VSS 20, VSS2 19 and VSSDCDC 18. The microprocessor 15 may be programmed via pins 3 PB6, 4 PB7 and TM12 and corresponding pads 17.

The green LED D1 is controller via pin PA4, and red LED D2 is controller by pin 14. Pins 7, 8 PA3 and 11 are unassigned.

Capacitance disc 13 is connected to pad 19 via a 30mm wire soldered thereto. Thus, pin 1 PB2 is used to test whether the pinger is underwater.

The microcontroller includes a build-in DC to DC converter, and an external DC to DC converter is provided by circuit elements R6, Q1, L2 and D3. The in-built DC to DC is switched on for two seconds at the same time a 24 kHz square wave output is produced at pin 2 PB4 this drives the second DC to DC converter (R6, Q1, L2, D3). After two seconds capacitor C4 has charged to 50 volts. This 2 second charge phase draws only 150 milliamps from the battery. The battery can comfortably and efficiently deliver this current.

The present circuit uses two DC to DC converters (however, the in principle a single converter would also work) to step the battery voltage of between 1.1V and 1.5V up to 50V.

During the 30 millisecond ping most of the energy is drawn from capacitor C4 and it is discharged to around half its initial voltage, delivering typically 0.2J of energy at a peak rate of 13W.

In order to achieve an AC 150V RMS required to drive the piezoelectric transducer 9 to over 170dB, the 50V DC rail supplies a full bridge switch composed of Q2,Q3,Q4 & Q5 FETs and high side level shifters D4, D5, R7, C5, R8, D6, C6.

The microcontroller 15 then outputs a ping signal from pin 6 PA2 and pin PC6 13 these are complimentary and square wave allowing the bridge to function correctly, as is well understood in the art.

The output from the bridge then passes through an inductor L3 that forms a resonant circuit due to the inherent capacitance of the piezo transducer 9 this results in a generally sinusoidal waveform with harmonics and a final RMS voltage of 150V.

## Claims

1. A pinger for deterring toothed whales, the pinger comprising:
a loudspeaker (9) configured to produce a series of pings; and
a DC power source with a first voltage;
said pinger being **characterized in that** it further comprises a DC-DC converter configured to step-up the first voltage to a second voltage;
a capacitor configured to store charge at the second voltage;
a controller (15) configured to use charge stored by the capacitor at the second voltage to activate the loudspeaker (9) to produce a ping.

2. A method for deterring toothed whales, the method comprising the steps of:
providing the pinger according to claim 1; and
activating the pinger to produce a ping.

## Patentansprüche

1. Ein Pinger zum Abschrecken von Zahnwalen, wobei der Pinger umfasst:
einen Lautsprecher (9), der konfiguriert ist, eine Serie von Pings zu erzeugen; und
eine Gleichstromquelle mit einer ersten Spannung;
wobei der Pinger **dadurch gekennzeichnet ist, dass** er ferner umfasst:
einen DC-DC-Wandler, der konfiguriert ist, die erste Spannung auf eine zweite Spannung hochzusetzen;
einen Kondensator, der konfiguriert ist, Ladung bei der zweiten Spannung zu speichern;
eine Steuerung (15), die konfiguriert ist, die vom Kondensator bei der zweiten Spannung gespeicherte Ladung zu verwenden, um den Lautsprecher (9) zu aktivieren, um einen Ping zu erzeugen.

2. Ein Verfahren zum Abschrecken von Zahnwalen, wobei das Verfahren die folgenden Schritte umfasst:
Bereitstellen des Pingers nach Anspruch 1; und
Aktivieren des Pingers, um einen Ping zu erzeugen.

## Revendications

1. - Emetteur d'impulsions sonores pour éloigner les cétacés à dents, l'émetteur d'impulsions sonores comprenant :
un haut-parleur (9) configuré pour produire une série d'impulsions sonores ; et
une source d'alimentation en courant continu avec une première tension ;
ledit émetteur d'impulsions sonores étant **caractérisé par le fait qu'**il comprend en outre :
un convertisseur continu-continu configuré pour accroître la première tension à une seconde tension ;
un condensateur configuré pour stocker une charge à la seconde tension ;
un dispositif de commande (15) configuré pour utiliser la charge stockée par le condensateur à la seconde tension afin d'activer le haut-parleur (9) pour qu'il produise une impulsion sonore.

2. - Procédé pour éloigner les cétacés à dents, le procédé comprenant les étapes consistant à :
fournir l'émetteur d'impulsions sonores selon la revendication 1 ; et
activer l'émetteur d'impulsions sonores pour qu'il produise une impulsion sonore.
